(19) Europäisches Patentamt
European Patent Office
Office européen des brevets

(11) Veröffentlichungsnummer: **0 176 834**
**B1**

(12) # EUROPÄISCHE PATENTSCHRIFT

(45) Veröffentlichungstag der Patentschrift: **06.02.91**

(51) Int. Cl.$^5$: **C 01 B 25/023**

(21) Anmeldenummer: **85111588.1**

(22) Anmeldetag: **13.09.85**

(54) **Stabilisierter und phlegmatisierter rieselfähiger roter Phosphor.**

(30) Priorität: **03.10.84 DE 3436159**

(43) Veröffentlichungstag der Anmeldung:
**09.04.86 Patentblatt 86/15**

(45) Bekanntmachung des Hinweises auf die Patenterteilung:
**06.02.91 Patentblatt 91/06**

(84) Benannte Vertragsstaaten:
**DE GB IT SE**

(56) Entgegenhaltungen:
**EP-A-0 028 744**
**DE-A-2 813 151**
**US-A-2 635 953**

(73) Patentinhaber: **HOECHST AKTIENGESELLSCHAFT**
**Postfach 80 03 20**
**D-6230 Frankfurt am Main 80 (DE)**

(72) Erfinder: **Staendeke, Horst, Dr.**
**Alte Honrather Strasse 22**
**D-5204 Lohmar (DE)**
Erfinder: **Thümmler, Ursus, Dr.**
**Am Kapellenbusch 27**
**D-5042 Erftstadt (DE)**

EP 0 176 834 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft stabilisierten und phlegmatisierten, pulverförmigen, rieselfähigen roten Phosphor aus Phosphorteilchen mit einer Teilchengröße von höchstens 2 mm, sowie ein Verfahren zur Herstellung des erfindungsgemäßen Produktes.

Roter Phosphor wird bekanntlich erhalten durch thermische Umwandlung des gelben Phosphors in die stabilere rote Modifikation. Der rohe, rote Phosphor mit einem Gehalt von etwa 0,51,5 Masse-% gelbem Phosphor bildet nach Beendigung der Reaktion eine kompakte Masse. Er wird unter Inertgasatmosphäre vermahlen und in wäßriger Suspension durch Kochen mit verdünnter Natronlauge vom gelben Phosphor befreit (Ullmanns Encyklopädie der technischen Chemie, 3. Auflage, 13. Band, 1962, Phosphor, Seiten 517/518, Verlag Urban und Schwarzenberg, München/Berlin). Neuerdings wird die Umwandlungin rotierenden Reaktoren vorgenommen, wobei der rote Phosphor als Pulver anfällt. Die aus dem Reaktor entnommene wäßrige Suspension von rotem Phosphor (EP-PS 00 15 384) wird in Rührgefäßen mit Dampf aufgeheizt und durch portionsweise Zugabe von Natronlauge vom Restanteil von etwa 0,1 Masse-% gelbem Phosphor befreit.

Roter Phosphor wird in der pyrotechnik sowie zur Herstellung von Zündholzreibflächen benötigt und findet Anwendung als Flammschutzmittel für Kunststoffe wie z.B. Polyamide oder Polyurethane. In jedem der vorgenannten Anwendungsgebiete ist die Verarbeitung des pulverförmigen roten Phosphors auf Grund seiner leichten Entzündbarkeit erschwert. Insbesondere die bei der Verarbeitung des roten phosphors bisher unvermeidliche Staubbildung birgt große Gefahren in sich, da bereits elektrostatische Entladungsfunken Staubexplosionen mit hoher Fortpflanzungsgeschwindigkeit auslösen können. Diese Gefahr ist umso größer, je feiner der rote Phosphor gemahlen ist. Feinpulverisierter roter Phosphor wird aber beipsielsweise bei der flammwidrigen Ausrüstung von Kunstostoffen benötigt.

Schließlich findet in feuchter Atmosphäre an der Oberfläche von rotem Phosphor eine chemische Reaktion statt, bei der durch Oxidation und Disproportionierung verschiende Säuren des Phosphors der Oxidationsstufen +1 bis +5 und Phosphorwasserstoff gebildet werden.

Es bestand somit die Aufgabe, vorgenannte Gefahren durch Stabilisieren und durch Phlegmatisieren des roten Phosphors zu beseitigen.

Hierbei wird unter dem Begriff Stabilisierung eine Maßnahme verstanden, die dem roten Phosphor einen besseren Schutz gegen atmosphärische Einflüsse verleiht und so z.B. bei der Lagerung oder der weiteren Verarbeitung zu einer geringeren Bildung von Oxosäuren des Phosphors und von Phosphorwasserstoff beiträgt.

Der Begriff Phlegmatisierung bedeutet, daß durch eine geeignete Maßnahme die Neigung des roten Phosphors zur Staubbildung reduziert wird, wodurch die Gefahr des Entstehens von Staubexplosionen sinkt und die Verarbeitungssicherheit steigt.

Zur Stabilisierung des roten Phosphors wurde bereits Aluminiumhydroxid vorgeschlagen (Gmelins Handbuch der anorganischen Chemie, 8. Auflage, 1964, Band Phosphor, Teil B, Seite 83, Verlag Chemie, Weinheim/Bergstrasse). Letzteres wird durch aufeinanderfolgenden Zusatz von auf 55—60°C erwärmten wässerigen 10 %igen Lösungen von Natriumhydrogencarbonat und Aluminiumsulfat auf den Phosphorteilchen ausgefällt. Die wässerige Suspension wird dann filtriert und der Filterrückstand getrocknet. Diese Verfahrensweise besitzt den Nachteil, daß zur Erzielung eines ausreichenden Stabilisierungseffektes unerwünscht große Mengen Aluminiumhydroxid angewandt werden müssen, so daß der Phosphor im Hinblick auf seine weitere Verwendung in seinen verschiedensten Anwendungsgebieten in einem nicht tolerierbaren Maße verunreinigt wird.

Es ist gemäß der deutschen Patentschrift 11 85 591 bekannt, pulverförmigen roten Phosphor gegen die Einwirkung von Luft und Feuchtigkeit dadurch zu schützen, daß man ihn mit in feinverteilter Form vorliegendem Paraffin und/oder Wachs innig vermischt, anschließend die Mischung nur wenig über den Schmelzpunkt des Paraffins und/oder Wachses erhitzt und dann wieder abkühlt.

Ein anderes Verfahren zur Stabilisierung von rotem Phosphor (US-PS 23 59 243) sieht vor, den roten Phosphor in einer wässerigen 0,04 normalen Lösung von Natriumaluminat zu suspendieren, wonach während 10 Stunden Luft bei 85—90°C durch die Suspension geleitet, filtriert, mit heißem Wasser gewaschen und im Vakuumgetrocknet wird.

Weiterhin ist es aus der US-Patentschrift 26 35 953 bekannt, zur Stabilisierung von rotem Phosphor außer Aluminiumhydroxid auch Zink- oder Magnesiumhydroxid zu verwenden.

Schließlich schlägt die DE-OS 28 13 151 vor, zur Stabilisierung von rotem phosphor ein Gemisch aus Aluminiumhydroxid und Bleihydroxid zu verwenden.

Die bisher genannten Verfahren sind nicht geeignet, mit einem Minmum an Stabilisator ein befriedigendes Ausmaß an Stabilisierung des roten phosphors gegen Oxidation zu gewährleisten. Diese bekannten Oxidationsstabilisatoren besitzen nämlich den Nachteil, daß sie nicht ausreichend thermostabil sind, weil sie bei höheren Temperaturen Wasser abspalten. Bei der Extruderverarbeitung von Kunststoffen, die roten Phosphor als Flammschutzmittel enthalten wobei der rote Phosphor seinerseits einen Oxidationsstabilisator enthält, ist es jedoch unerläßlich, daß der Oxidationsstabilisator thermostabil ist und selbst bei Temperaturen von über 300°C kein Wasser abspaltet und sich nicht zersetzt.

Dieser zuletzt genannte Nachteil trifft auch für das Stabilisierungsverfahren zu, das in der DE-OS 26 22 296 beschrieben wird. Der Stabilisierungseffekt wird in diesem Falle dadurch erreicht, daß geringe Mengen

von Metallsalzen verschiedener saurer Orthophosphorsäureester auf die Oberfläche des roten Phosphors aufgefällt werden.

Eine für eine Reihe von Einsatzgebieten unzureichende Oxidationsstabilität ergit sich bei der Verwendung von Metallsalzen der Orthophosphorsäure gemäß DE-OS 26 31 532 als Stabilisator.

Der Einsatz von Metallsalzen von Phosphonsäuren und Phosphinsäuren gemäß DE-OS 26 47 093 bzw. DE-OS 26 32 296 bringt zwar eine gute Thermo-und Oxidationsstabilität, jedoch sind hierfür etwa 3—5 Masse-% der relativ teuren Phosphon- bzw. Phosphinsäure nötig.

Eine wirksame Verbesserung ser Oxidationsstabilität von rotem Phosphor kann auch entsprechend der DE-PS 26 55 739 und DE-OS 27 05 042 durch Aufbringen einer dünnen Schicht eines Melamin/Formaldehyd-Harzes auf die Oberfläche der roten Phosphorteilchen erzielt werden. Diese Stabilisatoren erwiesen sich jedoch insofern als unbefriedigend, als der Stabilisierungseffekt bei Lagerung des stabilisierten Phosphors unter tropischen Bedingungen, d.h. bei 50°C und 100% relativer Luftfeuchte, wie sie im modifizierten Indian Standard-Test (IS 2012-1961) simuliert werden, weitgehend verlorengeht.

Die DE-PS 26 25 674 offenbart ein Mittel, das den Einsatz von rotem Phosphor in Kunststoff ermöglicht, ohne daß aufgrund der Verarbeitungstemperaturen des Kunststoffes und der Anwesenheit von geringen Mengen Wasser oder Feuchtigkeit in dem zu verarbeitenden Kunststoff Phosphorwasserstoff freigesetzt wird. Das Mittel umfaßt Epoxidharze, welche die Phosphorteilchen umhüllen, wobei der Anteil der Harze 5—50 Masse-% beträgt.

Schließlich wird in der DE-PS 29 45 118 stabilisierter, pulverförmiger, roter Phosphor, bestehend aus Phosphorteilchen mit einer Teilchengröße von höchstens 2 mm und einem Oxidationsstabilisator beansprucht, welcher ein Gemisch aus einem Epoxidharz und Aluminiumhydroxid verwendet, wobei der Oxidationsstabilisator die Phosphorteilchen in Form einer dünnen Schicht umhüllt. Beim Verfahren zur Herstellung des derart stabilisierten, pulverförmigen, roten Phosphors trägt man in eine wässerige Suspension des roten phosphors ein wasserlösliches Aluminiumsalz sowie eine wässerige oder alkoholische Lösung oder Dispersion eines Epoxidharzes und eines Härters ein und rührt das Gemisch nach Einstellen eines pH-Wertes von 5 bis 9 während 1 bis 3 Stunden bei einer Temperatur von 20 bis 90°C unter Ausfällung des Aluminiumhydroxides und gleichzeitiger Härtung des Epoxidharzes, worauf man schließlich den stabilisierten Phosphor nach Filtration bei erhöhter Temperatur trocknet.

Schließlich wird in der deutschen Auslegeschrift 22 49 638 die Phlegmatisierung des roten Phosphors mit Hilfe von bei Raumtemperatur und Atmosphärendruck flüssigen, reaktionsträgen und einen geringen Dampfdruck aufweisenden organischen oder silicoorganischen Verbindungen beschrieben. Der bevorzugte Konzentrationsbereich liegt bei 4—10 Masse-% an Phlematisierungsmittel. Dieser hohe Anteil an Phlegmatisierungsmittel schränkt die Verwendbarkeit des roten Phosphors deutlich ein. Darüber hinaus ist das vorbekannte Verfahren der Aufbringung des Phlegmatisierungsmittels durch inniges Vermischen der Komponenten mit erheblichen technischen Nachteilen behaftet. Nach der bevorzugten Ausführungsform kann der rote Phosphor auch mit einer Lösung des Phlegmatisierungsmittels in einem inerten Lösungsmittel, dessen Siedepunkt höchstens etwa 60°C beträgt, gemischt werden; anschließend wird das Lösungsmittel verdampft, Verfahrensmängel sind hierbei darin zu erblicken, daß einmal die Handhabung des pulverförmigen roten Phosphors die Gefahr von Staubexplosionen in sich birgt und zum anderen die Verwendung einer Lösung des Phlegmatisierungsmittels die völlige Entfernung des Lösungsmittels notwendig macht.

Mittel und Verfahren zur Herstellung eines Verkaufsproduktes aus rotem Phosphor mit ausreichender Stabilisierung, verbunden mit einer ausreichenden Phlegmatisierung sind bisher nicht aufgezeigt worden, ohne daß andererseits Nachteile des produktes selbst beziehungsweise bei dessen Herstellungsverfahren in Kauf genommen werden mußten. Diese genannten Nachteile konnten jedoch bei dem erfindungsgemäßen Mittel und der erfindungsgemäßen Verfahrensweise in überraschender Weise überwunden werden.

Gegenstand der Erfindung ist nunmehr stabilisierter und phlegmatisierter, pulverförmiger, rieselfähiger roter phosphor aus Phosphorteilchen mit einer Teilchengröße von höchstens 2 mm, welcher dadurch gekennzeichnet ist, daß

a) ein Oxydationsstabilisator und ein Phlegmatisierungsmittel die Phosphorteilchen in Form einer dünnen Schicht umhüllen;

b) der Oxidationsstabilisator in an sich bekannter Weise aus Aluminiumhydroxid und einem gehärteten Epoxidharz besteht;

c) die Gesamtmenge des Oxidationsstabilisators 0,1 bis 5 Masse-%, bezogen auf die Menge des roten Phosphors, beträgt;

d) der Aluminiumhydroxidanteil sich auf 0,01 bis 3 Masse-% und der Epoxidharz-Anteil sichauf 0,09 bis 4,99 Masse-%, jeweils bezogen auf die Menge des roten Phosphors, beläuft;

e) das Phlegmatisierungsmittel aus einer bei Raumtemperatur und Normaldruck flüssigen, gegen roten Phosphor reaktionsträgen und einen geringen Dampfdruck aufweisenden, wasseremulgierbaren organischen Verbindung besteht, und

f) die Gesamtmenge des Phlegmatisierungsmittels 0,05 bis unter 2 Masse-%, bezogen auf die Menge des roten Phosphors, beträgt.

Die vorliegende Erfindung besteht aber auch aus einem vorteilhaften Verfahren zur Herstellung von stabilisiertem und phlegmatisiertem roten Phosphor, wobei man den nach der Herstellung aus gelbem

Phosphor in wässeriger Suspension vorliegenden pulverförmigen roten phosphor durch Behandlung mit Natronlauge von Restanteilen an gelbem Phosphor befreit, innerhalb dieser wässerigen Suspension mit Aluminiumhydroxid und einem gehärteten Epoxidharz stabilisiert sowie innerhalb dieser wässerigen Suspension mit einer bei Raumtemperatur und Normaldruck flüssigen, gegen roten Phosphor reaktionsträgen und einen geringen Dampfdruck aufweisenden, wasseremulgierbaren organischen Verbindung phlegmatisiert, abfiltriert und trocknet.

Hiermit wird erstmals ein verfahrenstechnisch fortschrittliches Eintopfverfahren offenbart, bei dem alle Stufen wie die Reinigung, die Stabilisierung und die Phlegmatisierung des roten Phosphors in der aus seiner Herstellung herrührenden wässerigen Suspension und gegebenenfalls sogar in ein und demselben Behälter durchgeführt werden, aus welchem auch abschließend abfiltriert wird.

Mehr spezifiert besteht das erfindungsgemäße Verfahren im einzelnen darin, daß man

a) eine wässerige Suspension von rotem Phosphor mit einer Teilchengröße bis zu höchstens 2 mm durch Kochen mit verdünnter Natronlauge und unter Rühren in an sich bekannter Weise vom Restanteil an gelbem Phosphor befreit;

b) in einer nachgeschalteten Stabilisierungsstufe in diese gereinigte, wässerige Suspension des roten Phosphors ein wasserlösliches Aluminiumsalz und nach Einstellen eines pH-Wertes von 5—9 eine wässerige oder alkoholische Lösung, Emulsion oder Dispersion eines Epoxidharzes und eines Härters einträgt, derart, daß auf 95 bis 99,9 Masse-Teile roten Phosphor 5 bis 0,1 Masse-Teile des Oxidationsstabilisators fallen, wobei der Aluminiumhydroxidanteil sich auf 0,01 bis 3 Masse-% und der Epoxidharz-Anteil sich auf 0,09 4,99 Masse-%, jeweils bezogen auf die Menge des roten Phosphors, belaufen, worauf man das Gemisch während 1 bis 3 Stunden bei einer Temperatur von 20 bis 90°C unter Ausfällung des Aluminiumhydroxides und gleichzeitiger Härtung des Epoxidharzes rührt;

c) in einer nachgeschalteten Phlegmatisierungsstufe in diese wässerige Suspension des stabilisierten roten Phosphors eine wässerige Emulsion der als Phlegmatisierungsmittel dienenden, bei Raumtemperatur und Normaldruck flüssigen, gegen roten Phosphor reaktionsträgen und einen geringen Dampfdruck aufweisenden, wasseremulgierbaren organischen Verbindung einträgt, derart, daß auf über 98 bis 99,95 Masse-Teile stabilisierten roten Phosphor unter 2 bis 0,05 Masse-Teile der organischen Verbindung fallen, worauf man das Gemisch, gegebenenfalls nach wiederholtem Einstellen eines pH-Wertes von 5 bis 9, während 0,5 bis 3 Stunden bei einer Temperatur von 20 bis 90°C rührt und

d) den von dem Oxidationsstabilisator und dem Phlegmatisierungsmittel in dünner Schicht umhüllten roten Phosphor nach Filtration bei erhöhter Temperatur trocknet.

Das Verfahren ist wahlweise noch durch die folgenden Maßnahmen gekennzeichnet:

a) Die wässerige Suspension enthält bis zu 75 Masse-% roten Phosphor;

b) der rote Phosphor besitzt eine Teilchengröße von 0,0001 mm bis 0,5 mm;

c) als Epoxidharz werden in der Stabilisierungsstufe flüssige Epoxidharze mit sehr niedriger bis mittlerer Viskosität, die 100 %ig reaktiv sind und mit wasserlöslichen oder wasseremulgierbaren Härtern härtbar sind, eingesetzt;

d) als Epoxidharz werden in der Stabiliserungsstufe unmodifizierte, flüssige 100 %ig reaktive Umsetzungsprodukte aus Epichlorhydrin und Bisphenol A (2,2-Bis-(4-hydroxyphenyl)-propan), die mit wasserlöslichen oder wasseremulgierbaren Härtern härtbar sind, eingesetzt;

e) als Epoxidharz wird in der Stabilisierungsstufe eine wäßrige Epoxid-Phenolharz-Dispersion eingesetzt;

f) als Epoxidharz werden in der Stabilisierungsstufe wasseremulgierbare, 100 %ig reaktive Epoxidharzester, die mit wasserlöslichen oder wasseremulgierbaren Härtern härtbar sind, eingesetzt;

g) als Härter werden in der Stabiliserungsstufe wasserlösliche, intern modifizierte Polyamine oder wasseremulgierbare Polyaminoamide verwendet;

h) die Härtung der Epoxidharze in der Stabilisierungsstufe wird in wäßriger Phase bei einer Temperatur von 20—90°C und einem pH-Bereich von 5—9 durchgeführt;

i) die wässerige Emulsion der Phlegmatisierungsstufe enthält bis zu 25 Masse-% der als Phlegmatisierungsmittel dienenden organischen Verbindung;

k) in dem wässerigen Suspensions-/Emulsions-Gemisch der Phlegmatisierungsstufe fallen auf 98,2—99,95 Masseteilchen stabilisierten roten Phosphor 1,8—0,05 Masseteilchen derorganischen Verbindung;

l) nach Einstellen eines pH-Wertes von 6—8 wird in der Phlegmatisierungsstufe während 1 Stunde bei einer Temperatur von 60°C gerührt;

m) die organische Verbindung des Phlegmatisierungsmittels besteht aus Di-2-ethyl-hexylphthalat und

n) nach der abschließenden Filtration wird noch bei Temperaturen von 80 bis 120°C getrocknet.

Der nach der Erfindung stabilisierte und phlegmatisierte rote Phosphor sowie das Verfahren zu seiner Herstellung sind als technisch fortschrittlich zu bezeichnen. Zum einen ist das Stabilisierungsmittel thermostabil und außerdem so wirksam, daß bereits der Zusatz sehr kleiner Mengen dem roten Phosphor für viele Anwendungsgebiete eine ausreichende Stabilität verleiht. Zum anderen führt die erfindungsgemäße Phlegmatisierung in wäßriger phase in überraschender Weise dazu, daß die angestrebten Effekte bei sehr geringen Gehalten an Phlegmatisierungsmittel erreicht werden.

Das nach der beschriebenen Verfahrensweise anfallende Produkt ist gut rieselfähig und nicht staubend. Da die Staubbildung des so modifizierten roten Phosphors erheblich verringert ist, kann letzterer

ohne Schwierigkeiten in den eingangs erwähnten Anwendungsbereichen eingesetzt werden.

Die nachfolgenden Beispiele und Tabellendienen zur näheren Erläuterung der Erfindung:

Beispiel 1

Aus dem Umwandlungsreaktor wurden 3 1 PHOSPHOR ROT—Suspension mit einem Litergewicht von 1200 g entnommen und in ein 5 1-Becherglas gegeben. Nach einer Absitzzeit von etwa 3 Stunden wurden 1,5 1 der überstehenden klaren Flüssigkeit abgehebert. Es resultierte eine PHOSPHOR ROT — Suspension mit einem Litergewicht von 1360 g. Die Bestimmung des Gehaltes an gelbem Phosphor ergab einen Wert von 0,14%.

Nun wurde durch Zugabe von 25 %iger Natronlauge ein pH-Wert von 12 eingestellt; die Suspension wurde dann unter Rühren auf 90°C erwärmt und 1 Stunde bei dieser Temperatur gehalten. Der durch Disproportionierung entstehende Phosphorwasserstoff wurde durch Ausblasen mit Stickstoff entfernt. Eine erneut durchgeführte Bestimmung des Gehaltes an gelbem phosphor ergab einen Wert von <0,005%.

Nach dem Abkühlen der Suspension auf etwa 60°C wurde unter Rühren eine Lösung von 25 g Aluminiumsulfat ($Al_2(SO_4)_3$ 18 $H_2O$) in 250 ml eingetropft. Anschließend wurde durch Zugabe von 5 %iger Schwefelsäure ein pH-Wert von 5 eingestellt. Daraufhin wurde eine wäßrig/methanolische Emulsion von 5 g eines flüssigen, nichtmodifizierten Epoxidharzes (® Beckopox EP 140 der Firma Hoechst Aktiengesellschaft, Frankfurt/Main) mit einem Epoxidäquivalentgewicht von ca. 190, einer dynamischen Viskosität von 9000—12000 mPas (bei 25°C) und einer Dichte von 1,16 g/ml (bei 25°C) und 5 g eines in Wasser gelösten, modifizierten aliphatischen Polyamins (® Beckopox-Spezialhärter EH 623 der Firma Hoechst Aktiengesellschaft, Frankfurt/Main) mit einem H-Aktiv-Äquivalentgewicht von 200, einer dynamischen Viskosität von 10000—14000 (bei 25°C) und einer Dichte von 1,10 g/ml (bei 25°C)in 100 ml Wasser/Methanol (1:1) eingetropft. Die Suspension wurde 2 Stunden bei 60°C gerührt, dann durch Zugabe von 5 %iger Natronlauge auf einen pH-Wert von 7 eingestellt und nochmals 1 Stunde bei einer Temperatur von 60°C gerührt. Anschließend wurden 25 ml einer 20 %igen Di-2-ethylhexylphthalat-(DOP)-Emulsion zugesetzt. Die Suspension wurde 1 Stunde bei 60°C gerührt und dann filtriert. Der Filterrückstand wurde mit Wasser gewaschen und anschließend bei 100°C im Stickstoffstrom getrocknet.

Die Di-2-ethylhexylphthalat-(DOP)-Emulsion wurde auf folgende Weise hergestellt:

In 100 g Di-2-ethylhexylphthalat (z.B. ® Genomoll 100 der Firma Hoechst Aktiengesellschaft, Frankfurt/ Main) wurden 0,75 g eines geeigneten Emulgators (z.B. ® Arkopal N O 90 der Firma Hoechst Aktiengesellschaft, Frankfurt/ Main) eingerührt. Dann wurden unter intensivem Rühren 400 ml Wasser zugegeben.

Die analytisch ermittelten Stabilisatorgehalte lagen bei 0,51% Aluminiumhydroxid und 0,58% Epoxidharz. Der Gehalt an Phlegmatisierungsmittel wurde zu 0,44% DOP ermittelt.

Die Werte für die anwendungsbezogenen Ausprüfungen des auf diese Weise stabilisierten und phlegmatisierten roten Phosphors sind in den Tabellen 1—4 dargestellt.

Beispiel 2

Es wurde analog Beispiel 1 verfahren, wobei jedoch 50 g Aluminiumsulfat sowie 10 g ® Beckopox EP 140 und 10 g ® Beckopox-Spezialhärter EH 623 eingesetzt wurden.

Bei der Analyse wurden folgende Gehalte ermittelt:

0,96% $Al(OH)_3$
1,09% Epoxidharz
0,46% DOP

Die Werte für die anwendungsbezogenen Ausprüfungen des auf diese Weise stabilisierten und phlegmatisierten roten Phosphors sind in den Tabellen 1—4 dargestellt.

Beispiel 3

Es wurde analog Beispiel 1 verfahren, wobei jedoch anstelle des ® Beckopox-Spezialhärters EH 623 folgende Harz/Härter Kombination eingesetzt wurde:

6,5 g ® Beckopox EP 140
3,5 g ® Beckopox-Spezialhärter EH 655

(Lösungsmittelfreies Polyamidoamin mit einem H-Aktiv-Äquivalentgewicht von 100, einer dynamischen Viskosität von 1000—2000 mPas (bei 25°C) und einer Dichte von 0,95 g/ml (bei 25°C).

Bei der Analyse wurden folgende Gehalte ermittelt:

0,58% $Al(OH)_3$
0,64% Epoxidharz
0,42% DOP

Die Wert für die anwendungsbezogenen Ausprüfungen des auf diese Weise stabilisierten und phlegmatisierten roten Phosphors sind in den Tabellen 1—4 dargestellt.

Beispiel 4

Es wurde analog Beispiel 3 verfahren, wobei jedoch 50 g Aluminiumsulfat sowie 13 g ® Beckopox EP 140 und 7 g ® Beckopox-Spezialhärter EH 655 eingesetzt wurden.

Bei der Analyse wurden folgende Gehalte ermittelt:

1,04% $Al(OH)_3$
1,19% Epoxidharz
0,45% DOP

Die Werte für die anwendungsbezogenen Ausprüfungen des auf diese Weise stabilisierten und phlegmatisierten roten Phosphors sind in den Tabellen 1—4 dargestellt.

Im folgenden seien noch die über analytische Routineverfahren hinausgehenden Bestimmungsverfahren für die in den Beispielen und Tabellen angeführten Werte und Prüfergebnisse beschrieben:

Bestimmgun des DOP-Gehaltes

50 g Probematerial (hergestellt gemäß Beispielen 1—4) werden in einen 500 ml-Meßkolben eingewogen, mit Methanol bis zur Marke aufgefüllt und auf einem Magnetrührer 10—15 Minuten gerührt. Anschließend wird über ein Faltenfilter (32 cm Ø) filtriert; das Filtrat wird in einem trockenen Glasgefäß aufgefangen. Das meist trübe Filtrat wird dann mit 10—20 Tropfen einer Lösung von 10 g konzentrierter Salzsäure in 100 ml Methanol versetzt und nach gründlichem Mischen über doppelte Faltenfilter (32 cm Ø) in einen trockenen 250 ml-Meßkolben filtriert. Das klare, leicht gelblich gefärbte Filtrat wird in einen gewogenen 500 ml-Destillationskolben mit 2-3 Siedesteinen gegeben. Nach dem Abdestillieren der Hauptmenge des Methanols wird der Destillationskolben in einem elektrisch beheizten Trockenschrank bei 120°C bis zur Gewichtskonstanz erhitzt. Nach dem Erkalten des Kolbens wird die DOP-Menge gravimetrisch ermittelt.

Bestimmung der Oxidationsstabilität
Test 1:

In einem mit Gaseinleitrohr, Thermometer, Rückflußkühler und Magnetrührer ausgestatteten Dreihalskolben wurden 450 ml Wasser und 1 g des präparierten roten Phosphors vorgelegt, das Gemisch auf 80°C erwärmt und unter gleichzeitigem Rühren 10 Liter Sauerstoff pro Stunde in das Gemisch eingeleitet. Das über den Rückflußkühler entweichende Gasgemisch aus Sauerstoff und Phosphorwasserstoff, der durch Disproportionierung des roten phosphors neben Säuren des Phosphors verschiedener Oxidationsstufen entstanden war, wurde durch zwei nachgeschaltete Waschflaschen geleitet, welche jeweils mit 100 ml einer 2,5 gew%igen wässerigen Quecksilber (II)-chloridlösung beschickt waren.

Hierbei reagierte der Phosphorwasserstoff mit dem Quecksilber (II)-chlorid gemäß folgender Reaktionsgleichung:

$$PH_3 + 3\ HgCl_2 \longrightarrow P(HgCl)_3 + 3\ HCl$$

Als Maß für die Oxidationsstabilität des roten phosphors diente die Menge der in der wässerigen Suspension des roten Phosphors enthaltenden Oxosäuren des Phosphors sowie die in den Gaswaschflaschen enthaltene Salzsäure. Die Gehalte an Phosphorsäuren und Salzsäure wurden titrimetrisch ermittelt. Die daraus berechneten Werte sind in der Tabelle 1, Spalten A und B dargestellt. Spalte A gibt die bei der Oxidation des roten Phosphors entstandenen Mengen an $PH_3$ (mg $PH_3$ pro Gramm Phosphor pro Stunde) wieder.

Die Werte in Spalte B sind ein Maß für die Azidität der wässerigen phosphorhaltigen Suspension, verursacht durch die Bildung von Phosphorsäuren bei der Oxidation des Phosphors (mg KOH pro Gramm Phosphor pro Stunde).

Test 2.

Die Bestimmung der Oxidationsstabilität wurde in Anlehnung an Indian Standard "Specification of red phosphorus" (IS 2012—1961) durchgeführt.

Hierzu wurden 5,0 g roter Phosphor in eine Kristallisierschale mit einem Druchmesser von 50 mm eingewogen und die Schale in einem geschlossenen Glasgefäß 168 Stunden bei 50°C und 100% relativer Luftfeuchtigkeit gelagert. Der hierbei gebildete Phosphorwasserstoff wurde durch einen Luftstrom (10 l/h) aus dem Glasgefäß ausgetrieben, in einer Gaswaschflasche mit 2,5 gew%iger Quecksilber (II)-chloridlösung zur Reaktion gebracht und die Menge der dabei entstandenen Salzsäure titrimetrisch bestimmt.

Zur Bestimmung des Gehaltes an den verschiedenen Oxosäuren des Phosphors wurde die

Phosphorprobe in ein 250 ml-Becherglas übergeführt, mit 120 ml Wasser und 40 ml n-Propanol versetzt, 10 Minuten zum Sieden erhitzt und anschließend filtriert. Im Filtrat erfolgte dann die maßanalytische Bestimmung der Oxosäuren durch Titration mit 0,1 n NaOH bis zum Äquivalenzpunkt für die 2. Titrationsstufe bei pH 9,5.

Bestimmung der Rieselfähigkeit

Die Bestimmung der Rieselfähigkeit erfolgte mit dem in der DIN 53916 angegebenen Testgerät nach PFRENGLE.

(DIN 53916 (Ausgabe August 1974): Bestimmung der Rieselfähigkeit von Pulvern und Granulaten).

Bestimmung der Staubbildung

Ein Relativvergleich der Staubbildung wurde mit Hilfe des Konimeters, Typ H-S, der Firma Sartorius, Göttingen durchgeführt. Die Arbeitsweise dieses Gerätes ist von K. Guthmann, Stahl und Eisen 79, 1129 (1959) beschrieben worden.

Zur Vorbereitung der Messung wurde 1 g Probematerial in eine trockene 250 ml Glasflasche mit Schraubdeckel eingewogen und 2 Minuten intensiv geschüttelt. Nach Entfernung des Schraubdeckels erfolgte die Messung des Phosphorstaubes in den in der Tabelle 4 angegebenen Zeitintervallen.

TABELLE 1: Oxidationsstabilität gemessen nach Test 1

| PHORPHOR ROT-Produkt | Stabilisator-gehalt (%) | Phlegmatisierungsmittel-gehalt (%) | A<br>Phosphorwasserstoffentwicklung[a)] (mg $PH_3$/g·Std) | B<br>Säurebildung[a)] (mg KOH/g·Std) |
|---|---|---|---|---|
| Beispiel 1 | 0,51 % $Al(OH)_3$<br>0,58 % Epoxidharz | 0,44 % DOP | 0,04 | 0,8 |
| Beispiel 2 | 0,96 % $Al(OH)_3$<br>1,09 % Epoxidharz | 0,46 % DOP | 0,03 | 0,6 |
| Beispiel 3 | 0,58 % $Al(OH)_3$<br>0,64 % Epoxidharz | 0,42 % DOP | 0,01 | 0,4 |
| Beispiel 4 | 1,04 % $Al(OH)_3$<br>1,19 % Epoxidharz | 0,45 % DOP | < 0,01 | 0,3 |
| Handelsprodukt A[b)] | 0,85 % $Mg(OH)_2$ | - | 0,60 | 8,3 |
| Handelsprodukt B[c)] | - | - | 0,54 | 7,6 |

a) Mittelwerte aus 5 Einzelmessungen
b) PHOSPHOR ROT, Typ NN, der Hoechst Aktiengesellschaft, Frankfurt/Main
c) PHOSPHOR ROT, Typ SF, der Hoechst Aktiengesellschaft, Frankfurt/Main

TABELLE 2: Oxidationsstabilität gemessen nach Test 2

| PHOSPHOR ROT-Produkt | Stabilisatorgehalt (%) | Phlegmatisierungsmittelgehalt (%) | Phosphorwasserstoffentwicklung[a)] (mg/g) | Phosphorsäureentwicklung[a)] (%) |
|---|---|---|---|---|
| Beispiel 1 | 0,51 % $Al(OH)_3$<br>0,58 % Epoxidharz | 0,44 % DOP | < 0,02 | 0,14 |
| Beispiel 2 | 0,96 % $Al(OH)_3$<br>1,09 % Epoxidharz | 0,46 % DOP | < 0,02 | 0,10 |
| Beispiel 3 | 0,58 % $Al(OH)_3$<br>0,64 % Epoxidharz | 0,42 % DOP | < 0,02 | 0,06 |
| Beispiel 4 | 1,04 % $Al(OH)_3$<br>1,19 % Epoxidharz | 0,45 % DOP | < 0,02 | 0,02 |
| Handelsprodukt A[b)] | 0,85 % $Mg(OH)_2$ | - | 16,4 | > 15 |
| Handelsprodukt B[c)] | - | - | 15,1 | > 15 |

a) Mittelwerte aus 3 Einzelmessungen
b) PHOSPHOR ROT, Typ NN, der Hoechst Aktiengesellschaft, Frankfurt/Main
c) PHOSPHOR ROT, Typ SF, der Hoechst Aktiengesellschaft, Frankfurt/Main

TABELLE 3: Rieselfähigkeit und Kornverteilung

| PHOSPHOR ROT-Produkt | Körnungsanalyse (%)[a] | | | Rieselfähigkeit (DIN 53916)[b] | |
|---|---|---|---|---|---|
| | 400-100 µm | 100-45 µm | < 45 µm | Höhe des Schüttkegels (mm) | Cotangens des Schüttwinkels $\varphi$ |
| Beispiel 1 | 9 | 13 | 78 | 5,9 | 0,85 |
| Beispiel 2 | 12 | 14 | 74 | 5,7 | 0,88 |
| Beispiel 3 | 10 | 12 | 78 | 5,8 | 0,86 |
| Beispiel 4 | 14 | 13 | 73 | 5,5 | 0,90 |
| Handelsprodukt A[c] | 13 | 14 | 73 | 5,7 | 0,88 |
| Handelsprodukt B[d] | - | 2 | 98 | 5,8 | 0,86 |

a) Die Werte der Körnungsanalyse wurden durch Naßsiebung mit Methanol/Wasser ermittelt.
b) Mittelwerte aus 5 Einzelmessungen
c) PHOSPHOR ROT, Typ NN, der Hoechst Aktiengesellschaft, Frankfurt/Main
d) PHOSPHOR ROT, Typ SF, der Hoechst Aktiengesellschaft, Frankfurt/Main

TABELLE 4: Staubbildung und Kornverteilung

| PHOSPHOR ROT-Produkt | Körnungsanalyse (%)[a] | | | Anzahl der Staubteilchen/$cm^3$ Luft nach einer Absitzzeit von ... Minuten[b] | | | | | | | | | | |
|---|---|---|---|---|---|---|---|---|---|---|---|---|---|---|
| | 400-100 /um | 100-45 /um | 45 /um | 0 | 0,5 | 1,0 | 1,5 | 2,0 | 2,5 | 3,0 | 3,5 | 4,0 | 4,5 | 5,0 |
| Beispiel 1 | 9 | 13 | 78 | >500 | >500 | 340 | 130 | 10 | - | - | - | - | - | - |
| Beispiel 2 | 12 | 14 | 74 | >500 | 430 | 160 | 50 | - | - | - | - | - | - | - |
| Beispiel 3 | 10 | 12 | 78 | >500 | 160 | 40 | - | - | - | - | - | - | - | - |
| Beispiel 4 | 14 | 13 | 73 | 280 | 30 | - | - | - | - | - | - | - | - | - |
| Handelsprodukt A[c] | 13 | 14 | 73 | >500 | >500 | >500 | >500 | >500 | >500 | >500 | >500 | >500 | 420 | 270 |
| Handelsprodukt B[d] | - | 2 | 98 | >500 | >500 | >500 | >500 | >500 | >500 | >500 | >500 | >500 | >500 | >500 |

a) Die Werte der Körnungsanalyse wurden durch Naßsiebung mit Methanol/Wasser ermittelt.
b) Mittelwerte aus 5 Einzelmessungen
c) PHOSPHOR ROT, Typ NN, der Hoechst Aktiengesellschaft, Frankfurt/Main
d) PHOSPHOR ROT, Typ SF, der Hoechst Aktiengesellschaft, Frankfurt/Main

Die Werte für die Oxidationsstabilität (Tabellen 1 und 2) zeigen sehr deutlich die Überlegenheit des erfindungsgemäßen Stabilisatorsystems gegenüber konventionellen Stabilisatoren wie Magnesiumhydroxid (Handelsprodukt A).

Aus der Tabelle 3 ist zu entnehmen, daß die erfindungsgemäßen Maßnahmen zur Stabilisierung und Phlegmatisierung das Rieselverhalten, wie es der nicht phlegmatisierte rote Phosphor (Handelsprodukte A und B) zeigt, praktisch nicht verändern.

Die Prüfergebnisse zur Staubentwicklung (Tabelle 4) lassen erkennen, daß durch die erfindungsgemäßen Maßnahmen zur Stabilisierung und Phlegmatisierung die Neigung des roten Phosphors zur Staubbildung drastisch reduziert wird.

**Patentansprüche**

1. Stabilisierter und phlegmatisierter, pulverförmiger, rieselfähiger roter Phosphor aus Phosphorteilchen mit einer Teilchengröße von höchstens 2 mm, dadurch gekennzeichnet, daß

a) ein Oxydationsstabilisator und ein Phlegmatisierungsmittel die Phosphorteilchen in Form einer dünnen Schicht umhüllen;

b) der Oxidationsstabilisator in an sich bekannter Weise aus Aluminiumhydroxid und einem gehärteten Epoxidharz besteht;

c) die Gesamtmenge des Oxidationsstabilisators 0,1 bis 5 Masse-%, bezogen auf die Menge des roten Phosphors, beträgt;

d) der Aluminiumhydroxidanteil sich auf 0,01 bis 3 Masse-% und der Epoxidharz-Anteil sich auf 0,09 bis 4,99 Masse-%, jeweils bezogen auf die Menge des roten Phosphors, beläuft;

e) das Phlegmatisierungsmittel aus einer bei Raumtemperatur und Normaldruck flüssigen, gegen roten Phosphor reaktionsträgen und einen geringen Dampfdruck aufweisenden, wasseremulgierbaren organischen Verbindung be steht und

f) die Gesamtmenge des Phlegmatisierungsmittels 0,05 bis unter 2 Masse-%, bezogen auf die Menge des roten phosphors, beträgt.

2. Verfahren zur Herstellung von stabilisiertem und phlegmatisiertem, pulverförmigem, rieselfähigem roten phosphor gemäß Anspruch 1, dadurch gekennzeichnet, daß man den nach der Herstellung aus gelbem Phosphor in wässeriger Suspension vorliegenden pulverförmigen roten Phosphor durch Behandlung mit Natronlauge von Restanteilen an gelbem Phosphor befreit, innerhalb dieser wässerigen Suspension mit Aluminiumhydroxid und einem gehärteten Epoxidharz stabilisiert sowie innerhalb dieser wässerigen Suspension mit einer bei Raumtemperatur und Normaldruck flüssigen, gegen roten Phosphor reaktionsträgen und einen geringen Dampfdruck aufweisenden, wasseremulgierbaren organischen Verbindung phlegmatisiert, abfiltriert und trocknet.

3. Verfahren nach Anspruch 2, dadurch gekennzeichnet, daß man

a) eine wässerige Suspension von rotem phosphor mit einer Teilchengröße bis zu höchstens 2 mm durch Kochen mit verdünnter Natronlauge und unter Rühren in an sich bekannter Weise vom Restanteil an gelbem Phosphor befreit;

b) in einer nachgeschalteten Stabilisierungsstufe in diese gereinigte, wässerige Suspension des roten Phosphors zu dessen Stabilisierung ein wasserlösliches Aluminiumsalz und nach Einstellen eines pH-Wertes von 5—9 eine wässerige oder alkoholische Lösung, Emulsion oder Dispersion eines Epoxidharzes und eines Härters einträgt, derart, daß auf 95 bis 99,9 Masse-Teile roten Phosphor 5 bis 0,1 Masse-Teile des Oxydationsstabilisators fallen, wobei der Aluminiumhydroxidanteil sich auf 0,01 bis 3 Masse-% und der Epoxidharzanteil sich auf 0,09—4,99 Masse-%, jeweils bezogen auf die Menge des roten Phosphors, belaufen, worauf man das Gemisch während 1 bis 3 Stunden bei einer Temperatur von 20 bis 90°C unter Ausfällung des Aluminiumhydroxides und gleichzeitiger Härtung des Epoxidharzes rührt;

c) in einer nachgeschalteten Phlegmatisierungsstufe in diese wässerige Suspension des stabilisierten roten Phosphors zu dessen Phlegmatisierung eine wässerige Emulsion der als Phlegmatisierungsmittel dienenden, bei Raumtemperatur und Normaldruck flüssigen, gegen roten Phosphor reaktionsträgen und einen geringen Dampfdruck aufweisenden, wasseremulgierbaren organischen Verbindung einträgt, derart, daß auf über 98 bis 99,95 Masse-Teile stabilisierten roten Phosphor unter 2 bis 0,05 Masse-Teile der organischen Verbindung fallen, worauf man das Gemisch, gegebenenfalls nach wiederholtem Einstellen eines pH-Wertes von 5 bis 9, während 0,5 bis 3 Stunden bei einer Temperatur von 20 bis 90°C rührt und

d) den von dem Oxydationsstabilisator und dem Phlegmatisierungsmittel in dünner Schicht umhüllten roten Phosphor nach Filtration bei erhöhter Temperatur trocknet.

**Revendications**

1. Phosphore rouge stabilisé et phlegmatisé à l'état de poudre qui s'écoule librement, consistant en particules de phosphore à une dimension maximale de 2 mm, caractérisé en ce que:

a) un stabilisant contre l'oxydation et un agent phlegmatisant enrobent les particules de phosphore sous forme d'une couche mince;

b) le stabilisant contre l'oxydation consiste de manière connue en soi en hydroxyde d'aluminium et une résine époxydique durcie;

c) la quantité totale du stabilisant contre l'oxydation est de 0,1 à 5% en poids par rapport à la quantité de phosphore rouge;

d) la proportion d'hydroxyde d'aluminium est de 0,01 à 3% en poids et la proportion de résine époxydique de 0,09 à 4,99% en poids, dans les deux cas par rapport à la quantité de phosphore rouge;

e) l'agent phlegmatisant consiste en un composé organique liquide à température ambiante et pression normale, inerte à l'égard du phosphore rouge, à faible pression de vapeur et émulsionnable dans l'eau; et

f) la quantité totale de l'agent phlegmatisant est de 0,05 à moins de 2% en poids, par rapport à la quantité de phosphore rouge.

2. Procédé de préparation de phosphore rouge stabilisé et phlegmatisé, à l'état de poudre qui s'écoule librement, selon la revendication 1, caractérisé en ce que, partant du phosphore rouge pulvérulent à l'état de suspension aqueuse après sa préparation à partir du phosphore jaune, on le débarrasse des résidus de phosphore jaune par traitement avec de la lessive de soude, on le stabilise dans cette suspension aqueuse par de l'hydroxyde d'aluminium et une résine époxydique durcie et on le phlegmatise dans cette suspension aqueuse à l'aide d'un composé organique liquide à température ambiante et pression normale, inerte à l'ègard du phosphore rouge, ayant une faible pression de vapeur et émulsionnable dans l'eau, on le filtre et on le sèche.

3. Procédé selon la revendication 2, caractérisé en ce que:

a) partant d'une suspension aqueuse du phosphore rouge à une dimension de particule allant jusqu'à 2 mm au maximum, on la débarrasse de manière connue en soi des résidus de phosphore jaune par ébullition avec de la lessive de soude diluée, sous agitation;

b) dans une opération consécutive de stabilisation, on introduit dans cette suspension aqueuse purifiée du phosphore rouge, pour la stabilisation de ce dernier, un sel d'aluminium soluble dans l'eau et, après réglage à un pH de 5 à 9, une solution, émulsion ou dispersion aqueuse ou alcoolique d'une résine époxydique et d'un durcisseur en quantités correspondant, pour 95 à 99,9 parties en poids du phosphore rouge, à 5 à 0,1 parties en poids du stabilisant contre l'oxydation, la proportion d'hydroxyde d'aluminium représentant de 0,01 à 3% en poids et la proportion de résine époxydique de 0,09 à 4,99% en poids, dans les deux cas par rapport à la quantité de phosphore rouge, après quoi on agite ce mélange pendant 1 à 3 h à une température de 20 à 90°C, ce qui provoque la précipitation de l'hydroxyde d'aluminium et le durcissement simultané de la résine époxydique;

c) dans une opération consécutive de phlegmatisation, on introduit dans cette suspension aqueuse de phosphore rouge stabilisé, pour phlematisation de ce dernier, une émulsion aqueuse du composé organique servant d'agent phlegmatisant, liquide à température ambiante et pression normale, inerte à l'égard du phosphore rouge, ayant une faible pression de vapeur et émulsionnable dans l'eau, en quantité correspondant, pour 98 à 99,95 parties en poids de phosphore rouge stabilisé, à 0,05 partie en poids jusqu'à moins de 2 parties en poids du composé organique, après quoi, éventuellement après nouveau réglage à un pH de 5 à 9, on agite le mélange pendant 0,5 à 3 h à une température de 20 à 90°C; et

d) après filtration, on sèche à température élevée le phosphore rouge enrobé par le stabilisant contre l'oxydation et l'agent phlegmatisant à l'état de couche mince.

## Claims

1. Stabilized and phlegmatized, pulverulent red phosphorus with good free-flowing properties comprising phosphorus particles having a maximum particle size of 2 mm, wherein

a) an oxidation stabilizer and a phlegmatizing agent enclose the phosphorus particles in the form of a thin coating;

b) the oxidation stabilizer comprises, in a manner known per se, aluminum hydroxide and a cured epoxy resin;

c) the total amount of oxidation stabilizer is from 0.1 to 5% by weight, based on the amount of red phosphorus;

d) the proportion of aluminum hydroxide is from 0.01 to 3% by weight and the proportion of epoxy resin is from 0.09 to 4.99% by weight, in each case based on the amount of red phosphorus;

e) the phlegmatizing agent comprises a water-emulsifiable organic compound which is liquid at room temperature and atmospheric pressure, is inert toward red phosphorus and has a low vapor pressure, and

f) the total amount of phlegmatizing agent is from 0.05 to less than 2% by weight, based on the amount of red phosphorus.

2. A process for the preparation of stabilized and phlegmatized, pulverulent red phosphorus with good free-flowing properties as claimed in claim 1, wherein the pulverulent red phosphorus present in aqueous suspension after the preparation from yellow phosphorus is freed from residual amounts of yellow phosphorus by treatment with sodium hydroxide solution, stabilized in this aqueous suspension using aluminum hydroxide and a cured epoxy resin, and phlegmatized in this aqueous suspension using a water-emulsifiable organic compound which is liquid at room temperature and atmospheric pressure, is inert toward red phosphorus and has a low vapor pressure, and is filtered off and dried.

3. The process as claimed in claim 2, wherein

a) an aqueous suspension of red phosphorus having a maximum particle size of up to 2 mm is freed

from residual amounts of yellow phosphorus in a manner known per se by boiling with dilute sodium hydroxide solution with stirring;

b) a water-soluble aluminum salt and, after a pH of 5—9 has been established, an aqueous or alcoholic solution, emulsion or dispersion of an epoxy resin and of a curing agent are introduced into this purified, aqueous suspension of the red phosphorus for stabilization thereof in a downstream stabilization step in such a manner that from 5 to 0.1 parts by weight of the oxidation stabilizer are present per 95 to 99.9 parts by weight of red phosphorus, the aluminum hydroxide proportion being from 0.01 to 3% by weight and the epoxy resin proportion being from 0.09—4.99% by weight, in each case based on the amount of red phosphorus, and the mixture is then stirred at a temperature of from 20 to 90°C for from 1 to 3 hours while the aluminum hydroxide precipitates and the epoxy resin simultaneously cures;

c) an aqueous emulsion of the water-emulsifiable organic compound which serves as the phlegmatizing agent, is liquid at room temperature and atmospheric pressure, is inert toward red phosphorus and has a low vapor pressure is introduced into this aqueous suspension of the stabilized red phosphorus, for phlegmatization thereof, in a downstream phlegmatization stage in such a manner that from less than 2 to 0.05 parts by weight of the organic compound are present per from more than 98 to 99.95 parts by weight of stabilized red phosphorus, and the mixture, if desired after re-establishing a pH of from 5 to 9, is then stirred at a temperature of from 20 to 90°C for from 0.5 to 3 hours, and

d) the red phosphorus enclosed by the oxidation stabilizer and by the phlegmatizing agent in a thin coating is filtered off and dried at elevated temperature.